# EUROPEAN PATENT SPECIFICATION

(11) **EP 4 376 119 B1**
(45) Date of publication and mention of the grant of the patent: **23.07.2025**
(21) Application number: 22870167.8
(22) Date of filing: 25.08.2022
(51) Int. Cl.: H01M 4/134, H01M 4/62, H01M 4/38, H01M 10/052, H01M 4/02, H01B 1/04, H01M 4/133, H01M 4/36, H01M 4/587, H01M 10/0525

(54) **NEGATIVE ELECTRODE AND SECONDARY BATTERY INCLUDING THE SAME**
NEGATIVE ELEKTRODE UND SEKUNDÄRBATTERIE MIT DIESER ELEKTRODE
ÉLECTRODE NÉGATIVE ET BATTERIE SECONDAIRE AVEC CETTE ÉLECTRODE

(30) Priority: 16.09.2021 KR 20210124080
(43) Date of publication of application: 29.05.2024
(73) Proprietor: LG Energy Solution, Ltd., Seoul 07335 (KR)
(72) Inventor: JUN, Hyun Min, Daejeon 34122 (KR); KIM, Dong Hyuk, Daejeon 34122 (KR); LEE, Yong Ju, Daejeon 34122 (KR)
(74) Representative: Hoffmann Eitle
(86) International application number: PCT/KR2022/012761
(87) International publication number: WO 2023/043081

(56) References cited:
- WO-A1-2016/018023
- KR-A- 20160 109 946
- KR-A- 20210 058 172
- KR-B1- 100 578 868
- KR-B1- 101 937 897
- US-A1- 2019 097 263

## Description

### TECHNICAL FIELD

### Cross-reference to Related Applications

This application claims the benefit of Korean Patent Application No. 10-2021-0124080, filed on September 16, 2021, in the Korean Intellectual Property Office.

### Technical Field

The present invention relates to a negative electrode including a negative electrode active material layer, wherein the negative electrode active material layer includes a negative electrode active material and a conductive material, the negative electrode active material includes silicon particles, the conductive material includes single-walled carbon nanotubes and graphite-based particles, the graphite-based particles include a first artificial graphite and a second artificial graphite, the first artificial graphite is a plate-type artificial graphite, and the second artificial graphite includes a secondary particle structure in which a plurality of primary particles are bonded through amorphous carbon, and a secondary battery including the same.

### BACKGROUND ART

In recent years, there has been a dramatic increase in demand for batteries as energy sources with the technical development and increase in demand for mobile devices, and research on batteries capable of meeting various requirements has been conducted accordingly. In particular, research on a lithium secondary battery having a high energy density and also exhibiting excellent cycle characteristics as a power source for such devices has been actively conducted.

US2019/097263 A1 discloses a lithium ion secondary battery, wherein the negative electrode comprises a first artificial graphite and a second artificial graphite having different capacities. As a silicon material a silicon alloy is used.

A lithium secondary battery refers to a battery in which a non-aqueous electrolyte containing lithium ions is included in an electrode assembly that includes a positive electrode including a positive electrode active material enabling intercalation/deintercalation of lithium ions, a negative electrode including a negative electrode active material enabling intercalation/deintercalation of lithium ions, and a microporous separator interposed between the positive electrode and the negative electrode.

A lithium metal, a lithium alloy, crystalline or amorphous carbon, a carbon composite, a silicon-based active material, and the like are used as the negative electrode active material. Among the above, the silicon-based active material is used alone or in combination with another negative electrode active material to improve capacity of secondary batteries.

Particularly, silicon particles (pure silicon) in the silicon-based active material have a fairly high capacity, and thus, when the silicon particles are used to form a negative electrode active material, the capacity properties of secondary batteries may be greatly improved. However, when the silicon particles are used as a negative electrode active material, silicon particles in an upper portion (a region placed far from a current collector) of a negative electrode are mainly involved in battery operation, and silicon particles in a lower portion (a region placed close to a current collector) of a negative electrode are relatively less likely to affect the battery operation. This non-uniform reactions between the upper portion and the lower portion of the negative electrode prevents desired capacity of batteries from being sufficiently secured, and rapid degradation of the silicon particles in the upper portion causes low capacity retention rate of the batteries.

Meanwhile, a conductive material is used to improve conductivity in the negative electrode. When a small spherical conductive material such as Super C is used as a conductive material for the negative electrode using silicon particles, the conductive material blocks pores in the negative electrode, thereby lowering straight-running properties of the diffusion path of lithium ions. Accordingly, the non-uniform reactions, in which the silicon particles in the upper portion of the negative electrode mainly react, and the silicon particles in the lower portion of the negative electrode are relatively less likely to affect the battery operation, are further increased. Accordingly, the batteries exhibit deteriorated capacity retention rate and quick charging performance.

### DISCLOSURE OF THE INVENTION

### TECHNICAL PROBLEM

An aspect of the present invention provides a negative electrode that minimizes non-uniform reactions of silicon particles in the negative electrode, and may thus improve capacity retention rate and quick charging performance of a battery, and a secondary battery including the same.

Another aspect of the present invention provides an increase in an amount of a negative electrode active material participating in charging and discharging of a battery by improving conductivity in a negative electrode to increase capacity of the battery.

### TECHNICAL SOLUTION

According to an aspect of the present invention, there is provided a negative electrode including a negative electrode active material layer, wherein the negative electrode active material layer includes a negative electrode active material and a conductive material, the negative electrode active material includes silicon particles, the conductive material includes single-walled carbon nanotubes and graphite-based particles, the graphite-based particles include a first artificial graphite and a second artificial graphite, the first artificial graphite is a plate-type artificial graphite, and the second artificial graphite includes a secondary particle structure in which a plurality of primary particles are bonded through amorphous carbon.

According to another aspect of the present invention, there is provided a secondary battery including the negative electrode.

### ADVANTAGEOUS EFFECTS

According to the present invention, single-walled carbon nanotubes and graphite-based particles are used as conductive materials, and the graphite-based particles include a plate-type artificial graphite and an artificial graphite having a secondary particle structure in which a plurality of primary particles are bonded, and accordingly a diffusion path of lithium ions in a negative electrode may be secured in a long straight form to allow the lithium ions in the negative electrode to be more uniformly diffused. Accordingly, a difference in extent of degradation between an upper portion and a lower portion of the negative electrode may be reduced to improve cycle characteristics and quick charging performance of batteries. Furthermore, a conductive path in the negative electrode is smoothly secured by the use of the conductive material to increase an amount of a negative electrode active material participating in the process of charging and discharging batteries, thereby improving capacity of the batteries.

### MODE FOR CARRYING OUT THE INVENTION

Hereinafter, the present invention will be described in detail to aid in understanding of the present invention. As used herein, it will be understood that words or terms used in the specification and claims of the present invention shall not be construed as being limited to having the meaning defined in commonly used dictionaries. It will be further understood that the words or terms should be interpreted as having meanings that are consistent with their meanings in the context of the relevant art and the technical idea of the invention, based on the principle that an inventor may properly define the meaning of the words or terms to best explain the invention.

The term "average particle diameter (D₅₀)" as used herein may be defined as a particle diameter at a cumulative volume of 50% in a particle size distribution curve of particles. The average particle diameter (D₅₀), for example, may be measured using a laser diffraction method. The laser diffraction method may generally measure a particle diameter ranging from a submicron level to a few mm and may obtain highly repeatable and high-resolution results.

As used herein, a "specific surface area" is measured through a BET method, and specifically may be calculated from an amount of nitrogen gas adsorbed at a liquid nitrogen temperature (77K) using BELSORP-mini II from BEL JAPAN, INC.

As used herein, single-walled carbon nanotubes are carbon allotropes in the form of a tube having a single wall formed of carbon atoms.

### <Negative electrode>

A negative electrode according to an embodiment of the present invention may include a negative electrode active material layer, the negative electrode active material layer may include a negative electrode active material and a conductive material, the negative electrode active material may include silicon particles, the conductive material may include single-walled carbon nanotubes and graphite-based particles, the graphite-based particles may include a first artificial graphite and a second artificial graphite, the first artificial graphite may be a plate-type artificial graphite, and the second artificial graphite includes a secondary particle structure in which a plurality of primary particles are bonded through amorphous carbon.

The negative electrode active material layer may be disposed on a current collector. Alternatively, the negative electrode active material layer may be a negative electrode by itself without a current collector (free-standing).

The current collector is not particularly limited as long as it has conductivity without causing chemical changes in batteries. For example, copper, stainless steel, aluminum, nickel, titanium, fired carbon, or aluminum or stainless steel that is surface-treated with one of carbon, nickel, titanium, silver, or the like may be used as the current collector. Specifically, a transition metal which well adsorbs carbon such as copper and nickel may be used as the current collector. The current collector may have a thickness of 6 µm to 20 µm, but the thickness of the current collector is not limited thereto.

The negative electrode active material layer may include a negative electrode active material and a conductive material.

The negative electrode active material may include silicon particles. The silicon particles correspond to particles formed of silicon (Si) alone, and specifically, may be pure silicon. The silicon particles are materials having higher capacity than other negative electrode active materials such as carbon-based active material particles, SiO, and Si/C, and thus, when the silicon particles are used as a negative electrode active material, capacity of a battery may be significantly improved.

The negative electrode active material layer may include the silicon particles in an amount of 50 wt% to 90 wt%, specifically 70 wt% to 90 wt%. When the above ranges are satisfied, cycle characteristics (capacity retention rate) and quick charging performance of a battery are maintained and energy density per unit volume of a battery may also be improved.

The silicon particles may have an average particle diameter (D₅₀) of 0.1 µm to 100 µm, specifically 1 µm to 10 µm, and more specifically 4 µm to 6 µm. When the silicon particles having the average particle diameter are used, breakage of the silicon particles is minimized in the process of charging and discharging of batteries. In addition, as having a proper contact area with the plate-type artificial graphite, the contact may remain the same even with a large volume change of the silicon particles when batteries are driven, indicating that a larger amount of the silicon particles may participate in an electrochemical reaction. Accordingly, the batteries may have greater capacity. In addition, when the above range is satisfied, damage to the single-walled carbon nanotubes may be minimized when batteries are driven, and the single-walled carbon nanotubes may be sufficiently in contact with a surface of the silicon particles.

The conductive material may include single-walled carbon nanotubes and graphite-based particles.

The single-walled carbon nanotube provides conductivity to the negative electrode to allow batteries to be efficiently charged and discharged.

The single-walled carbon nanotubes may have an average length of 1 µm to 1,000 µm, specifically 2 µm to 100 µm, and more specifically 10 µm to 50 µm. When the above range is satisfied, a conductive network may be effectively formed in the negative electrode to allow batteries to be efficiently charged and discharged. The average length of the single-walled carbon nanotubes is determined through cross-section SEM after cutting a cross section of the negative electrode using instruments such as ion milling. Specifically, the average length of the single-walled carbon nanotubes may be obtained from an average value of lengths of the top 100 single-walled carbon nanotubes having a larger length and the bottom 100 single-walled carbon nanotubes having a smaller length on a screen at 3000x magnification through SEM. Using the way described above, the average length of the single-walled carbon nanotubes may be determined.

The single-walled carbon nanotubes have an average diameter of 0.5 nm to 10 nm, specifically 0.5 nm to 5 nm, and more specifically 1 nm to 2 nm. When the above range is satisfied, the single-walled carbon nanotube may be sufficiently conductive and flexible to improve conductivity in the negative electrode. The average diameter of the single-walled carbon nanotubes is determined through cross-section SEM after cutting a cross section of the negative electrode using instruments such as ion milling. Specifically, the average diameter of the single-walled carbon nanotubes may be obtained from an average value of diameters of the top 100 single-walled carbon nanotubes having a larger diameter and the bottom 100 single-walled carbon nanotubes having a smaller diameter on a screen at 3000x magnification through SEM. Using the way described above, the average diameter of the single-walled carbon nanotubes may be determined.

The negative electrode may include the single-walled carbon nanotubes in an amount of 0.01 wt% to 10 wt%, specifically 0.1 wt% to 1 wt%, and more specifically 0.2 wt% to 0.5 wt%. When the above range is satisfied, side reactions resulting from the single-walled carbon nanotubes may be minimized, and aggregation between the single-walled carbon nanotubes may be prevented, thereby improving cycle characteristics and quick charging performance of batteries.

The graphite-based particles may include a first artificial graphite and a second artificial graphite.

The first artificial graphite may be a plate-type artificial graphite. The "plate-type" refers to a form having a predetermined thickness and a wide surface perpendicular to the thickness, and the thickness may be 500 nm to 3,000 nm, and the longest length of the wide surface may be 1 µm to 30 µm. Since the plate-type artificial graphite is used as the first artificial graphite, conductive contact between the silicon particles and the first artificial graphite may remain the same even with a large volume change and particle breakage of the silicon particles upon battery operation. Accordingly, batteries may have improved capacity retention rate. In addition, in the combined use of the first artificial graphite and the single-walled carbon nanotubes, the first artificial graphite may provide a surface bonded to the single-walled carbon nanotubes to form a conductive network in the negative electrode, and accordingly the conductive network in the negative electrode may be formed more effectively.

The first artificial graphite may be in the form of a single particle. The 'single particle form' refers to one as being present in a negative electrode as one small particle itself rather than intentionally bonding small particles to form a single large secondary particle. That the first artificial graphite has a single particle form indicates that a wide surface of the plate-type artificial graphite may be secured. Therefore, the silicon particles and the first artificial graphite may be bonded having a large contact area, and the contact between the silicon particles and the first artificial graphite may thus be effectively maintained.

The first artificial graphite may have an average longest length of 1 µm to 20 µm, specifically 3 µm to 10 µm, and more specifically 4 µm to 6 µm. When the above range is satisfied, the first artificial graphite may be present to surround the silicon particles at a proper level, and batteries may thus show improved charging and discharging performance. The "longest length" refers to a longest length when a line connecting one point to another point of the first artificial graphite is assumed. The average longest length of the first artificial graphite may be determined through cross-section SEM after cutting a cross section of the negative electrode using instruments such as ion milling. Specifically, the average longest length of the first artificial graphite may be obtained from an average value of longest lengths of the top 100 first artificial graphites having a larger particle diameter and the bottom 100 first artificial graphites having a smaller diameter on a screen at 3000x magnification through SEM. Using the way described above, the average longest length of the first artificial graphite may be determined.

The first artificial graphite may have a specific surface area of 10 m²/g to 60 m²/g, specifically 15 m²/g to 30 m²/g, and specifically 17 m²/g to 18 m²/g. When the above range is satisfied, side reactions caused by the first artificial graphite may be minimized, and the silicon particles and the first artificial graphite may contact smoothly, thereby improving cycle characteristics of batteries.

The negative electrode may include the first artificial graphite in an amount of 1 wt% to 50 wt%, specifically 5 wt% to 30 wt%, and more specifically 10 wt% to 15 wt%. When the above range is satisfied, capacity of the negative electrode may be secured and conductivity of the negative electrode may also be improved to increase energy density and capacity retention rate.

The second artificial graphite may include a secondary particle structure in which a plurality of primary particles are bonded through amorphous carbon. Specifically, the second artificial graphite may have a spherical secondary particle structure in which a plurality of artificial graphites are bonded as primary particles. Due to high electrical conductivity of the amorphous carbon of the second artificial graphite, electrical contact between the single-walled carbon nanotubes and the second artificial graphite may be easy to improve conductivity in the negative electrode, leading to improvement in quick charging performance of batteries. In addition, the second artificial graphite may effectively maintain an internal pore structure even with a rolling process required upon manufacturing of the negative electrode. Therefore, a diffusion path of lithium ions in the negative electrode may be secured in a long straight form to allow the lithium ions in the negative electrode to be more uniformly diffused. Accordingly, a difference in extent of degradation between an upper portion and a lower portion of the negative electrode may be reduced to improve cycle characteristics and quick charging performance of batteries. In addition, as the second artificial graphite is in the form of secondary particles rather than a single particle, an irreversible amount of lithium may be reduced upon battery operation, and electrical resistance of the negative electrode may be lowered.

The second artificial graphite may have an average particle diameter of 10 µm to 40 µm, specifically 12 µm to 20 µm, and more specifically 14 µm to 19 µm. The average particle diameter of the second artificial graphite may be determined through cross-section SEM after cutting a cross section of the negative electrode using instruments such as ion milling. Specifically, the average particle diameter of the second artificial graphite may be obtained from an average value of particle diameters of the top 100 second artificial graphites having a larger particle diameter and the bottom 100 second artificial graphites having a smaller particle diameter on a screen at 3000x magnification through SEM. Using the way described above, the average particle diameter of the second artificial graphite may be determined. When the above range is satisfied, damage to a current collector by the second artificial graphite may be minimized upon the rolling process of the negative electrode, the silicon particles and the second artificial graphite may be in contact smoothly, and diffusion of lithium ions may be improved, thereby enhancing charging and discharging performance of batteries.

The second artificial graphite may have a specific surface area of 0.1 m²/g to 10 m²/g, specifically 0.5 m²/g to 1 m²/g, and specifically 0.7 m²/g to 0.8 m². When the above range is satisfied, side reactions caused by the second artificial graphite may be minimized to improve capacity of batteries.

A weight ratio of the first artificial graphite to the second artificial graphite may be 2.5:7.5 to 7.5:2.5, specifically 4:6 to 6:4. When the above range is satisfied, cycle characteristics of batteries may be more effectively improved.

The graphite-based particles may be included in an amount of 500 parts by weight to 25,000 parts by weight, specifically 5,000 parts by weight to 15,000 parts by weight, and more specifically 7,500 parts by weight to 12,500 parts by weight, with respect to 100 parts by weight of the single-walled carbon nanotubes. When the above range is satisfied, a conductive network in the negative electrode may be effectively formed to further improve charging and discharging performance of batteries.

The negative electrode active material layer may include the graphite-based particles in an amount of 1 wt% to 50 wt%, specifically 10 wt% to 25 wt%, and more specifically 15 wt% to 20 wt%. When the above range is satisfied, conductivity of the negative electrode active material and diffusivity of lithium ions may be maintained at a high level to improve cycle characteristics and quick charging performance of batteries.

The negative electrode active material layer may include the conductive material in an amount of 1 wt% to 50 wt%, specifically 10 wt% to 30 wt%, and more specifically 15 wt% to 25 wt%. When the above range is satisfied, capacity of the negative electrode may remain at a high level and also lifespan of the negative electrode may be increased.

The negative electrode active material layer may further include a binder. The binder serves to secure adhesion between electrode active materials or between an electrode active material and a current collector, and binders generally used in the art may be used, and the type is not particularly limited. The binder, for example, may include vinylidene fluoride-hexafluoropropylene copolymer (PVDF-co-HFP), polyvinyl alcohol, polyacrylonitrile, starch, hydroxypropyl cellulose, regenerated cellulose, polyvinylpyrrolidone, polytetrafluoroethylene, polyethylene, polypropylene, an ethylene-propylene-diene polymer (EPDM), a sulfonated-EPDM, carboxymethyl cellulose (CMC), a styrene-butadiene rubber (SBR), a fluorine rubber, or various copolymers thereof, and any one thereof or a mixture of two or more thereof may be used.

### <Secondary battery>

A secondary battery according to another embodiment of the present invention may include the above-described negative electrode of an embodiment. Specifically, the secondary battery is a secondary battery including a positive electrode, a negative electrode, an electrolyte, and a separator, the negative electrode is the same as the above-described negative electrode of an embodiment, and the secondary battery may be a lithium secondary battery.

The secondary battery may be manufactured according to methods generally known in the art. For example, the secondary battery may be prepared by putting a separator between a positive electrode and a negative electrode and adding an electrolyte in which lithium salts are dissolved.

The positive electrode may include a positive electrode active material. A lithium transition metal oxide may be preferably used as the positive electrode active material, and the positive electrode active material, for example, may be at least one selected from the group consisting of Liₓ₁CoO₂ (0.5<x1<1.3), Liₓ₂NiO₂ (0.5<x2<1.3), Liₓ₃MnO₂ (0.5<x3<1.3), Liₓ₄Mn₂O₄ (0.5<x4<1.3), Liₓ₅(Niₐ₁Co_{b1}Mn_{c1})O₂ (0.5<x5<1.3, 0<a1<1, 0<b1<1, 0<c1<1, a1+b1+c1=1), Liₓ₆Ni_{1-y1}Co_{y1}O₂ (0.5<x6<1.3, 0<y1<1), Liₓ₇Co_{1-y2}Mn_{y2}O₂ (0.5<x7<1.3, 0≤y2<1), Liₓ₈Ni_{1-y3}Mn_{y3}O₂ (0.5<x8<1.3, 0≤y3<1), Liₓ₉(Niₐ₂Co_{b2}Mn_{c2})O₄ (0.5<x9<1.3, 0<a2<2, 0<b2<2, 0<c2<2, a2+b2+c2=2), Liₓ₁₀Mn_{2-z1}Ni_{z1}O₄ (0.5<x10<1.3, 0<z1<2), Liₓ₁₁Mn_{2-z2}Co_{z2}O₄ (0.5<x11<1.3, 0<z2<2), Liₓ₁₂CoPO₄ (0.5<x12<1.3), and Liₓ₁₃FePO₄ (0.5<x13<1.3) .

A typical porous polymer film, for example, a porous polymer film prepared from a polyolefin-based polymer such as an ethylene homopolymer, a propylene homopolymer, an ethylene/butene copolymer, an ethylene/hexene copolymer, and an ethylene/methacrylate copolymer, may be used alone or in a lamination therewith as the separator included in the lithium secondary battery according to the present invention, and also, a typical porous nonwoven fabric, for example, a nonwoven fabric formed of high melting point glass fibers or polyethylene terephthalate fibers may be used, but the separator is not limited thereto.

The electrolyte included in the lithium secondary battery according to the present invention may include an organic solvent which is at least one selected from the group consisting of propylene carbonate (PC), ethylene carbonate (EC), diethyl carbonate (DEC), dimethyl carbonate (DMC), dipropyl carbonate (DPC), dimethylsulfoxide, acetonitrile, dimethoxyethane, diethoxyethane, tetrahydrofuran, N-methyl-2-pyrrolidone (NMP), ethylmethyl carbonate (EMC), gamma-butyrolactone (GBL), fluoroethylene carbonate (FEC), methyl formate, ethyl formate, propyl formate, methyl acetate, ethyl acetate, propyl acetate, pentyl acetate, methyl propionate, ethyl propionate, and butyl propionate.

In addition, the electrolyte according to the present invention may further include a lithium salt, and an anion of the lithium salt may be at least one selected from the group consisting of F⁻, Cl⁻, Br⁻, I⁻, NO₃⁻, N(CN)₂⁻, BF₄⁻, ClO₄⁻, PF₆⁻, (CF₃)₂PF₄⁻, (CF₃)₃PF₃⁻, (CF₃)₄PF₂⁻, (CF₃)₅PF⁻, (CF₃)₆P⁻, F₃SO₃⁻, CF₃CF₂SO₃⁻, (CF₃SO₂)₂N⁻, (FSO₂)₂N⁻, CF₃CF₂(CF₃)₂CO⁻, (CF₃SO₂)₂CH⁻, (SF₅)₃C⁻, (CF₃SO₂)₃C⁻, CF₃(CF₂)₇SO₃⁻, CF₃CO₂⁻, CH₃CO₂⁻, SCN⁻, and (CF₃CF₂SO₂)₂N⁻.

The lithium secondary battery according to the present invention may be a cylindrical type secondary battery, a prismatic type secondary battery, and a pouch type secondary battery, but the lithium secondary battery is not limited thereto as long as it corresponds to a charge and discharge device.

Furthermore, the present invention provides a battery module including the lithium secondary battery as a unit cell and a battery pack including the battery module.

The battery pack may be used as a power source of at least one medium and large sized device selected from the group consisting of a power tool; electric cars including an electric vehicle (EV), a hybrid electric vehicle (HEV), and a plug-in hybrid electric vehicle (PHEV); or a power storage system.

Hereinafter, examples of the present invention will be described in detail in such a manner that it may easily be carried out by a person with ordinary skill in the art to which the present invention pertains.

Conductive materials were prepared as follows.
A-1: Single-walled carbon nanotubes
A-2: Multi-walled carbon nanotubes
B-1: Plate-type artificial graphite (specific surface area: 18 m²/g)
B-2: Spherical artificial graphite (D₅₀: 11 µm, specific surface area: 14 m²/g)
C-1: Artificial graphite in the form of secondary particles in which a plurality of artificial graphite primary particles are bonded through amorphous carbon (specific surface area: 0.7 m²/g)
C-2: Spherical artificial graphite in the form of a single particle (specific surface area: 10 m²/g)

### Example 1 Preparation of Negative Electrode

A negative electrode slurry including silicon particles (pure silicon) having an average particle diameter (D₅₀) of 5 µm, single-walled carbon nanotubes A-1, plate-type artificial graphite B-1 (first artificial graphite), an artificial graphite in the form of secondary particles in which a plurality of artificial graphite primary particles are bonded through amorphous carbon C-1 (second artificial graphite), a polyacrylamide-based polymer as a binder, and water as a solvent was prepared.

The negative electrode slurry was applied onto a copper (Cu) metal thin film, which is a negative electrode collector, having a thickness of 20 µm, and then dried. In this case, the temperature of circulated air was 60 °C. Thereafter, the resulting product was roll-pressed and then dried in a vacuum oven of 130 °C for 12 hours (loading amount: 8.55 mAh/cm²) to prepare a negative electrode.

In the prepared negative electrode, a weight ratio of the silicon particles, the single-walled carbon nanotubes, the first artificial graphite, the second artificial graphite, and the binder was 70:0.21:10:10:9.79.

### Examples 2 to 7 and Comparative Examples 1 to 5: Preparation of Negative Electrode

Negative electrodes were manufactured in the same manner as in Example 1, except that compositions were changed as shown in Table 1 below.

**[Table 1]**

| | Carbon nanotube amount (wt%) | | First artificial graphite amount (wt%) | | Second artificial graphite amount (% by weight) | |
|---|---|---|---|---|---|---|
| | A-1 | A-2 | B-1 | B-2 | C-1 | C-2 |
| Example 1 | 0.21 | - | 10 | - | 10 | - |
| Example 2 | 0.21 | - | 2 | - | 18 | - |
| Example 3 | 0.21 | - | 5 | - | 15 | - |
| Example 4 | 0.21 | - | 15 | - | 5 | - |
| Example 5 | 0.21 | - | 18 | - | 2 | - |
| Example 6 | 0.21 | - | 5 | - | 5 | - |
| Example 7 | 0.1 | - | 10 | - | 10 | - |
| Comparative Example 1 | 0.21 | - | 20 | - | - | - |
| Comparative Example 2 | 0.21 | - | - | - | 20 | - |
| Comparative Example 3 | - | 0.21 | 10 | - | 10 | - |
| Comparative Example 4 | 0.21 | - | - | 10 | 10 | - |
| Comparative Example 5 | 0.21 | - | 10 | - | - | 10 |

The single-walled carbon nanotubes had an average length of 10 µm, and an average diameter of 2 nm. The average length and average diameter were determined through Cross-Section SEM after cutting the negative electrode using instruments such as ion milling. Specifically, the average length of the single-walled carbon nanotubes was determined by obtaining an average value of the lengths of the top 100 longest single-walled carbon nanotubes and the bottom 100 shortest single-walled carbon nanotubes on a screen at 3000x magnification through SEM. The average diameter was also determined in the same manner. The plate-type artificial graphite B-1 had an average longest length of 6 µm. The artificial graphite C-1 in the form of secondary particles in which the plurality of artificial graphite primary particles were bonded through amorphous carbon had an average particle diameter of 18 µm.

The spherical artificial graphite C-2 in the form of a single particle had an average particle diameter of 9 µm.

The average longest length of the plate-type artificial graphite B-1, the average particle diameter of the artificial graphite C-1 in the form of secondary particles in which the plurality of artificial graphite primary particles are bonded through amorphous carbon, and the average particle diameter of the spherical artificial graphite C-2 in the form of a single particle was determined through the same method as the method for determining the average length of the single-walled carbon nanotubes.

### Experimental Example 1: Evaluation of Capacity Retention Rate

Cycle characteristics of the negative electrodes of Examples 1 to 7 and Comparative Examples 1 to 5 were evaluated and the results are shown in Table 2.

### (1) Preparation of coin cells

Li[Ni_{0.8}Mn_{0.1}Co_{0.1}]O₂ as the positive electrode active material, PVdF as the binder, and Super P as the conductive material were added to NMP and stirred to prepare a positive electrode slurry, and the resulting product was applied onto an aluminum collector to form a positive electrode (loading amount: 4.5 mAh/cm²). The positive electrode was cut into a circle of 1.76715 cm².

A porous polyethylene separator was interposed between the positive electrode and the prepared negative electrode to assemble a battery, and an electrolyte (dimethyl carbonate (DMC)/fluoroethylene carbonate (FEC) = 7/3 (volume ratio), vinylene carbonate in an amount of 3 wt%, lithium hexafluorophosphate (LiPF₆) at a concentration of 1 M) was injected to prepare lithium coin cells.

### (2) Evaluation

Each coin cell was charged and discharged as follows.
1^{st} Cycle: charging was performed at a constant current of 0.1 C, and constant voltage charging (0.05 V) was performed upon reaching 0.005 C and 0.05 V. Discharging was performed at a constant current of 0.1 C up to 1.5 V.
2^{nd} Cycle: charging was performed at a constant current of 0.1 C, and constant voltage charging (0.05 V) was performed upon reaching 0.005 C and 0.05 V. Discharging was performed at a constant current of 0.1 C up to 1.0 V.
3^{rd} to 200^{th} Cycles: charging was performed at a constant current of 0.5 C, and constant voltage charging (0.05 V) was performed upon reaching 0.005 C and 0.05 V. Discharging was performed at a constant current of 0.5 C up to 1.0 V.

Capacity retention rates were each determined through Equation below. Capacity retention rate (%) = (Discharge capacity at 200th cycle/Discharge capacity at 1st cycle) × 100

### Experimental Example 2: Evaluation of Quick Charging Performance

### (1) Preparation of coin half-cells

A lithium metal thin film cut into a circle having a size of 1.76715 cm² was used as a positive electrode. A porous polyethylene separator was interposed between the positive electrode and the negative electrodes of Examples or Comparative Examples to assemble a battery, and an electrolyte (dimethyl carbonate (DMC)/fluoroethylene carbonate (FEC) = 7/3 (volume ratio), vinylene carbonate in an amount of 3 wt%, lithium hexafluorophosphate (LiPF₆) at a concentration of 1 M) was injected into the assembled battery to prepare lithium coin half-cells.

### (2) Evaluation

Each coin half-cell was charged and discharged as follows.

3 cycles of charging and discharging were performed to activate the coin half-cells. Specifically, the charging was performed at a constant current of 0.1 C, and constant voltage charging (0.05 V) was performed upon reaching 0.005 C and 0.05 V. Discharging was performed at a constant current of 0.1 C up to 1.0 V. The used negative electrode had a porosity of 40% and a loading amount of 8.55 mAh/cm², and evaluation was performed at room temperature (25 °C). Thereafter, while charging at a constant current of 6 C, SOC which corresponds to charging capacity at 6 C with respect to discharge capacity at cycle 3 was set as X-axis variable and voltage was set as Y-axis variable, and then differentiated twice along the X-axis to determine inflection points, and this was evaluated as lithium precipitation SOC.

**[Table 2]**

| Negative electrode | Capacity retention rate (%, 200 cycles) | Evaluation of quick charging performance (SOC) |
|---|---|---|
| Example 1 | 88 | 49 |
| Example 2 | 78 | 51 |
| Example 3 | 83 | 50 |
| Example 4 | 84 | 44 |
| Example 5 | 82 | 37 |
| Example 6 | 82 | 38 |
| Example 7 | 84 | 42 |
| Comparative Example 1 | 76 | 33 |
| Comparative Example 2 | 80 | 35 |
| Comparative Example 3 | 75 | 25 |
| Comparative Example 4 | 77 | 32 |
| Comparative Example 5 | 74 | 29 |

It is seen that Comparative Example 1 with no use of the second artificial graphite and Comparative Example 2 with no use of the first artificial graphite had both poorer capacity retention rate and quick charging performance than Example 1 using both the first artificial graphite and the second artificial graphite. In addition, it is seen that Comparative Example 3 using multi-walled carbon nanotubes instead of single-walled carbon nanotubes had both poor capacity retention rate and quick charging performance.

In addition, it is seen that Comparative Example 4 using a spherical artificial graphite instead of a plate-type artificial graphite as the first artificial graphite, and Comparative Example 5 using an artificial graphite in the form of a single particle instead of in the form of secondary particles as the second artificial graphite had both poor capacity rate and quick charging performance.

## Claims

1. A negative electrode comprising a negative electrode active material layer,
wherein the negative electrode active material layer comprises a negative electrode active material and a conductive material,
the negative electrode active material comprises silicon particles,
the conductive material comprises single-walled carbon nanotubes and graphite-based particles,
the graphite-based particles comprise a first artificial graphite and a second artificial graphite,
the first artificial graphite is a plate-type artificial graphite, and
the second artificial graphite comprises a secondary particle structure in which a plurality of primary particles are bonded through amorphous carbon.

2. The negative electrode of claim 1, wherein the negative electrode comprises the silicon particles in an amount of 50 wt% to 90 wt%.

3. The negative electrode of claim 1, wherein the silicon particles have an average particle diameter (D₅₀) of 0.1 µm to 100 µm.

4. The negative electrode of claim 1, wherein the single-walled carbon nanotubes have an average length of 1 µm to 1,000 µm.

5. The negative electrode of claim 1, wherein the single-walled carbon nanotubes have an average diameter of 0.5 nm to 10 nm.

6. The negative electrode of claim 1, wherein the first artificial graphite is in the form of a single particle.

7. The negative electrode of claim 1, wherein the first artificial graphite has an average longest length of 1 µm to 20 µm.

8. The negative electrode of claim 1, wherein the first artificial graphite has a specific surface area of 10 m²/g to 60 m²/g.

9. The negative electrode of claim 1, wherein the second artificial graphite has an average particle diameter (D₅₀) of 10 µm to 40 µm.

10. The negative electrode of claim 1, wherein the second artificial graphite has a specific surface area of 0.1 m²/g to 10 m²/g.

11. The negative electrode of claim 1, wherein a weight ratio of the first artificial graphite to the second artificial graphite is 2.5:7.5 to 7.5:2.5.

12. The negative electrode of claim 1, wherein the graphite-based particles are contained in an amount of 500 parts by weight to 25,000 parts by weight with respect to 100 parts by weight of the single-walled carbon nanotubes.

13. The negative electrode of claim 1, wherein the negative electrode active material layer comprises the graphite-based particles in an amount of 1 wt% to 50 wt%.

14. A secondary battery comprising the negative electrode of claim 1.

## Patentansprüche

1. Negative Elektrode, umfassend eine Negativelektrodenaktivmaterialschicht,
wobei die Negativelektrodenaktivmaterialschicht ein Negativelektrodenaktivmaterial und ein leitfähiges Material umfasst,
das Negativelektrodenaktivmaterial Siliziumteilchen umfasst,
das leitfähige Material einwandige Kohlenstoffnanoröhren und Teilchen auf Graphitbasis umfasst,
die Teilchen auf Graphitbasis einen ersten künstlichen Graphit und einen zweiten künstlichen Graphit umfassen,
der erste künstliche Graphit ein plattenförmiger künstlicher Graphit ist und
der zweite künstliche Graphit eine Sekundärteilchenstruktur umfasst, in der mehrere Primärteilchen durch amorphen Kohlenstoff verbunden sind.

2. Negative Elektrode gemäß Anspruch 1, wobei die negative Elektrode die Siliziumteilchen in einer Menge von 50 Gew.-% bis 90 Gew.-% umfasst.

3. Negative Elektrode gemäß Anspruch 1, wobei die Siliziumteilchen einen mittleren Teilchendurchmesser (D₅₀) von 0,1 µm bis 100 µm aufweisen

4. Negative Elektrode gemäß Anspruch 1, wobei die einwandigen Kohlenstoffnanoröhren eine mittlere Länge von 1 µm bis 1.000 µm aufweisen.

5. Negative Elektrode gemäß Anspruch 1, wobei die einwandigen Kohlenstoffnanoröhren einen mittleren Durchmesser von 0,5 nm bis 10 nm aufweisen.

6. Negative Elektrode gemäß Anspruch 1, wobei der erste künstliche Graphit in Form eines einzelnen Teilchens vorliegt.

7. Negative Elektrode gemäß Anspruch 1, wobei der erste künstliche Graphit eine mittlere längste Länge von 1 µm bis 20 µm aufweist.

8. Negative Elektrode gemäß Anspruch 1, wobei der erste künstliche Graphit eine spezifische Oberfläche von 10 m²/g bis 60 m²/g aufweist.

9. Negative Elektrode gemäß Anspruch 1, wobei der zweite künstliche Graphit einen mittleren Teilchendurchmesser (D₅₀) von 10 µm bis 40 µm aufweist.

10. Negative Elektrode gemäß Anspruch 1, wobei der zweite künstliche Graphit eine spezifische Oberfläche von 0,1 m²/g bis 10 m²/g aufweist.

11. Negative Elektrode gemäß Anspruch 1, wobei das Gewichtsverhältnis des ersten künstlichen Graphits zum zweiten künstlichen Graphit 2,5:7,5 bis 7,5:2,5 beträgt.

12. Negative Elektrode gemäß Anspruch 1, wobei die Teilchen auf Graphitbasis in einer Menge von 500 Gewichtsteilen bis 25.000 Gewichtsteilen, bezogen auf 100 Gewichtsteile der einwandigen Kohlenstoffnanoröhren, enthalten sind.

13. Negative Elektrode gemäß Anspruch 1, wobei die Negativelektrodenaktivmaterialschicht die Teilchen auf Graphitbasis in einer Menge von 1 Gew.-% bis 50 Gew.-% umfasst.

14. Sekundärbatterie, umfassend die Negativelektrode gemäß Anspruch 1.

## Revendications

1. Électrode négative comprenant une couche de matériau actif d'électrode négative,
dans laquelle la couche de matériau actif d'électrode négative comprend un matériau actif d'électrode négative et un matériau conducteur,
le matériau actif d'électrode négative comprend des particules de silicium,
le matériau conducteur comprend des nanotubes de carbone à paroi unique et des particules à base de graphite,
les particules à base de graphite comprennent un premier graphite artificiel et un second graphite artificiel,
le premier graphite artificiel est un graphite artificiel de type plaque, et
le second graphite artificiel comprend une structure particulaire secondaire dans laquelle une pluralité de particules primaires sont liées par le biais d'un carbone amorphe.

2. Électrode négative selon la revendication 1, dans laquelle l'électrode négative comprend les particules de silicium en une quantité de 50 % en poids à 90 % en poids.

3. Électrode négative selon la revendication 1, dans laquelle les particules de silicium présentent un diamètre de particule moyen (D₅₀) de 0,1 µm à 100 µm.

4. Électrode négative selon la revendication 1, dans laquelle les nanotubes de carbone à paroi unique présentent une longueur moyenne de 1 µm à 1 000 µm.

5. Électrode négative selon la revendication 1, dans laquelle les nanotubes de carbone à paroi unique présentent un diamètre moyen de 0,5 µm à 10 µm.

6. Électrode négative selon la revendication 1, dans laquelle le premier graphite artificiel se présente sous la forme d'une particule unique.

7. Électrode négative selon la revendication 1, dans laquelle le premier graphite artificiel présente une longueur moyenne la plus longue de 1 µm à 20 µm.

8. Électrode négative selon la revendication 1, dans laquelle le premier graphite artificiel présente une superficie spécifique de 10 m²/g à 60 m²/g.

9. Électrode négative selon la revendication 1, dans laquelle le second graphite artificiel présente un diamètre de particule moyen (D50) de 10 µm à 40 µm.

10. Électrode négative selon la revendication 1, dans laquelle le second graphite artificiel présente une superficie spécifique de 0,1 m²/g à 10 m²/g.

11. Électrode négative selon la revendication 1, dans laquelle un rapport pondéral entre le premier graphite artificiel et le second graphite artificiel est de 2,5/7,5 à 7,5/2,5.

12. Électrode négative selon la revendication 1, dans laquelle les particules à base de graphite sont contenues en une quantité de 500 parties en poids à 25 000 parties en poids par rapport à 100 parties en poids des nanotubes de carbone à paroi unique.

13. Électrode négative selon la revendication 1, dans laquelle la couche de matériau actif d'électrode négative comprend les particules à base de graphite en une quantité de 1 % en poids à 50 % en poids.

14. Batterie secondaire comprenant l'électrode négative selon la revendication 1.
